(19)

Europäisches
Patentamt
European
Patent Office
Office européen
des brevets

(11)  **EP 1 962 468 B1**

(12)  **EUROPEAN PATENT SPECIFICATION**

(45) Date of publication and mention
of the grant of the patent:
**20.11.2013  Bulletin 2013/47**

(51) Int Cl.:
***H04L 29/06*** *(2006.01)*

(21) Application number: **07122392.9**

(22) Date of filing: **05.12.2007**

(54) **Apparatus and Method for Processing Data**

Vorrichtung und Verfahren zur Datenverarbeitung

Appareil et procédé de traitement de données

(84) Designated Contracting States:
**DE GB NL**

(30) Priority: **14.02.2007  KR 20070015337**
**30.05.2007  KR 20070052668**

(43) Date of publication of application:
**27.08.2008  Bulletin 2008/35**

(73) Proprietor: **Samsung Electronics Co., Ltd.**
**Suwon-si, Gyeonggi-do, 443-742 (KR)**

(72) Inventor: **Song, Min-suk**
**Gyeonggi-do (KR)**

(74) Representative: **Walaski, Jan Filip et al**
**Venner Shipley LLP**
**200 Aldersgate**
**London**
**EC1A 4HD (GB)**

(56) References cited:
**WO-A1-03/029990     US-A1- 2006 023 702**
**US-B1- 6 757 273**

Printed by Jouve, 75001 PARIS (FR)

**Description**

The present invention relates to data processing, and more particularly, to reproducing a file being received from an external device in real time.

With the advance of radio communication and networking technologies, devices constituting a network are able to wirelessly transmit and receive files and thus utilize a file stored on one device.

Multimedia file transfer between the devices constituting the network can be performed in real time or in non real time. Protocols are provided for the respective cases. The real time transfer protocol supports the reproduction of the multimedia file before a device receiving the multimedia file completes the file reception. By contrast, the non real time transfer protocol supports the multimedia file reproduction only after the reception of the multimedia file is finished.

Audio Video (AV) Protocol is one of the real time transfer protocols applied to the wireless network constructed according to Bluetooth. In the AV protocol, a Bluetooth device A can reproduce a file in real time while receiving the file from a Bluetooth device B.

However, the AV protocol does not support a function which enables the Bluetooth device A to receive a list of files stored to the Bluetooth device B.

As a result, a user of the Bluetooth device A cannot select his/her intended multimedia file to be reproduced from the multimedia files stored to the Bluetooth device B. To enable the user to select the intended multimedia file from the Bluetooth device B, the user needs to move to the location of the Bluetooth device B and then select the intended file by manipulating the Bluetooth device B in person.

Also, to change the multimedia file being reproduced at the Bluetooth device A, the user needs to move to the location of the Bluetooth device B and then select another intended file by personally manipulating the Bluetooth device B. Therefore, the user is inconvenienced.

To address those drawbacks, it is necessary to amend the AV protocol or establish a protocol which supports a function enabling the Bluetooth device A to receive the list of the files stored to the Bluetooth device B, which is a complex subject in practice.

In the meantime, there may also be a Bluetooth device C which supports communications based on the non real time transfer protocol but does not support communications based on the real time transfer protocol. In this case, the Bluetooth device A cannot even reproduce the file in real time while receiving the multimedia file from the Bluetooth device C.

The present invention provides a method for reproducing a file which is received according to a non real time transfer protocol, rather than a real time transfer protocol, in real time and a video apparatus thereof.

The present invention provides a reproducing method for avoiding interruption when a file, which is being received according to a non real time transfer protocol, is reproduced in real time, and a video apparatus thereof.

According to an aspect of the present invention, there is provided a video apparatus comprising a communication module which is connected to an external device to communicate with the external device; a buffer which stores data received through the communication module; a decoder which decodes input data; a controller which stores data constituting a file received from the external device via the communication module according to a non real time transfer protocol, in the buffer, and applies part of the data stored to the buffer to the decoder before all of data constituting the file is completely received; and an output unit which reproduces data decoded at the decoder in a real time.

The non real time transfer protocol may not support multimedia streaming. The non real time transfer protocol may be a File Transfer Protocol (FTP).

The controller may control the receiving of a list of files stored in the external device from the external device via the communication module according to the non real time transfer protocol, and outputting the received list through the output unit.

When data fed from the controller is completely decoded, the decoder may provide the decoded data to the output unit and request data to be decoded to the controller.

The controller may apply part of the data stored in the buffer to the decoder when the request is received from the decoder, request next data following the most recently received data in a file structure to the external device via the communication module, and store the next data received from the external device via the communication module according to the non real time transfer protocol to the buffer.

When the data to be decoded is completely received from the controller, the decoder may decode the data.

The communication module may be connected to the external device to enable radio communication with the external device. The communication module may be connected to the external device to enable radio communication using Bluetooth. The file may be at least one of an audio file and a video file.

The video apparatus may further comprise a broadcast reception module which receives a broadcast signal. The decoder may decode a broadcast signal received at the broadcast reception module, and the output unit may output a broadcast of the broadcast signal decoded at the decoder.

According to the aspect of the present invention, a reproduction method comprises storing data constituting a file which is received from an external device according to a non real time transfer protocol; decoding part of the stored data before all of the data constituting the file is completely received; and reproducing the decoded data in real time.

The non real time transfer protocol may not support multimedia streaming. The non real time transfer protocol may be FTP.

The reproduction method may further comprise receiving a list of files stored to the external device from the external device according to the non real time transfer protocol; and outputting the received list.

The decoding operation may comprise applying, by a controller which stores the data constituting the received file in a buffer, part of the data stored in the buffer to a decoder which decodes the data before all of the data constituting the file is completely received; decoding, by the decoder, the data applied from the controller; providing, by the decoder, the decoded data to an output unit which reproduces the decoded data in real time when the data applied from the controller is completely decoded; and requesting, by the decoder, data to be decoded to the controller.

The decoding operation may further comprise applying, by the controller, part of the data stored to the buffer to the decoder when the request is received from the decoder; and requesting, by the controller, next data following the most recently received data in a file structure to the external data, and storing the next data received from the external device according to the non real time transfer protocol, to the buffer.

The decoding operation may further comprise decoding, by the decoder, the data, when the data to be decoded is completely received from the controller.

The storing operation may comprise storing data constituting a file which is wirelessly received from the external device. The storing operation may comprise storing data constituting a file which is wirelessly received from the external device using Bluetooth.

The file may be at least one of an audio file and a video file.

The reproduction method may further comprise decoding a received broadcast signal; and outputting a broadcast of the decoded broadcast signal.

According to another aspect of the present invention, there is provided a video apparatus comprising a communication module which is connected to an external device to communicate with the external device; a buffer which stores data received through the communication module; a decoder which decodes a part of the data stored in the buffer while the data constituting a file received from the external device via the communication module according to a non real time transfer protocol, are stored to the buffer; and an output unit which reproduces the data decoded at the decoder in real time.

The communication module may receive data from the external device according to the non real time transfer protocol even while the decoder decodes the data.

The video apparatus may further comprise a controller which controls the decoder to commence the decoding after data of the file greater than a reserve storage capacity are completely stored in the buffer.

The controller may calculate the reserve storage capacity using a transmission speed of a front portion of the file which is received through the communication module and stored to the buffer.

The controller may calculate an expected transmission time of the entire file using the transmission speed of the front portion of the file and a total capacity of the file, and calculate the reserve storage capacity using the expected transmission time, a reproduction time of the file, and the transmission speed of the front portion of the file.

The non real time transfer protocol may not support multimedia streaming. The non real time transfer protocol may be FTP.

The controller may control to receive a list of files stored to the external device from the external device through the communication module according to the non real time transfer protocol and to output the received list through the output unit. The communication module may be connected to the external device to enable radio communication with the external device.

The communication module may be connected to the external device to enable radio communication with the external device using Bluetooth.

The file may be at least one of an audio file and a video file.

The video apparatus may further comprise a broadcast reception module which receives a broadcast signal. The decoder may decode a broadcast signal received at the broadcast reception module, and the output unit may output a broadcast of the broadcast signal decoded at the decoder.

According to another aspect of the present invention, there is provided a reproduction method comprising receiving and storing data constituting a file from an external device according to a non real time transfer protocol; decoding part of pre-stored data while the data is stored; and reproducing the decoded data in real time.

The decoding operation may comprise receiving and storing data from the external device according to the non real time transfer protocol even while part of pre-stored data is decoded.

The decoding operation may start to decode part of the pre-stored data after data of the file is completely stored exceeds a reserve storage capacity.

The reproduction method may further comprise calculating the reserve storage capacity using a transmission speed of a front portion of the file.

The calculating operation may comprise calculating an expected transmission time of the entire file using the transmission speed of the front portion of the file and a total capacity of the file; and calculating the reserve storage capacity using the expected transmission time, a reproduction time of the file, and the transmission speed of the front portion of the file.

The non real time transfer protocol may not support multimedia streaming. The non real time transfer protocol may be FTP.

The reproduction method may further comprise receiving a list of files stored to the external device from the external device according to the non real time transfer protocol; and outputting the received list.

The storing operation may comprise wirelessly receiving the data from the external device and storing the data. The storing operation may comprise receiving the data from the external device using Bluetooth and storing the data.

The file may be at least one of an audio file and a video file.

According to a further aspect of the present invention, there is provided a video apparatus comprising a communication module which is connected to an external device to communicate with the external device; a buffer which stores data constituting a file which is received from the external device through the communication module according to a non real time transfer protocol; a decoder which decodes part of data stored in the buffer; an output unit which reproduces data decoded at the decoder in real time; and a controller which calculates a reserve storage capacity using a transmission speed of a front portion of the file which is received through the communication module and stored in the buffer, and controls the decoder to commence the decoding after the data constituting the file exceeding the reserve storage capacity is completely stored in the buffer.

According to a further aspect of the present invention, there is provided a reproduction method comprising calculating a reserve storage capacity using a transmission speed of a front portion of a file which is received from an external device according to a non real time transfer protocol and stored; starting to decode after data constituting the file is completely stored exceeds the reserve storage capacity; and reproducing the decoded data in real time.

The above and/or other aspects of the present invention will be more apparent by describing certain exemplary embodiments of the present invention with reference to the accompanying drawings, in which:

FIG. 1 is a block diagram of a DTV according to an exemplary embodiment of the present invention;
FIG. 2 is a flowchart of a real time reproduction of an audio file being received at the DTV of FIG. 1 according to FTP;
FIG. 3 is a block diagram of a DTV according to another exemplary embodiment of the present invention;
FIG. 4 is a flowchart of a seamless real time reproduction of an audio file being received at the DTV of FIG. 3 according to FTP;
FIG. 5 is a block diagram of a video apparatus according to yet another exemplary embodiment of the present invention;
FIG. 6 is a flowchart of a real time reproduction of a file being received at the video apparatus of FIG. 5 according to a non real time transfer protocol;
FIG. 7 is a block diagram of a video apparatus according to still another exemplary embodiment of the present invention;
FIG. 8 is a flowchart of a seamless real time reproduction of a file being received at the video apparatus of FIG. 7 according to a non real time transfer protocol;
FIG. 9 is a block diagram of a video apparatus according to a further exemplary embodiment of the present invention; and
FIG. 10 is a flowchart of a seamless real time reproduction of a file being received at the video apparatus of FIG. 9 according to a non real time transfer protocol.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

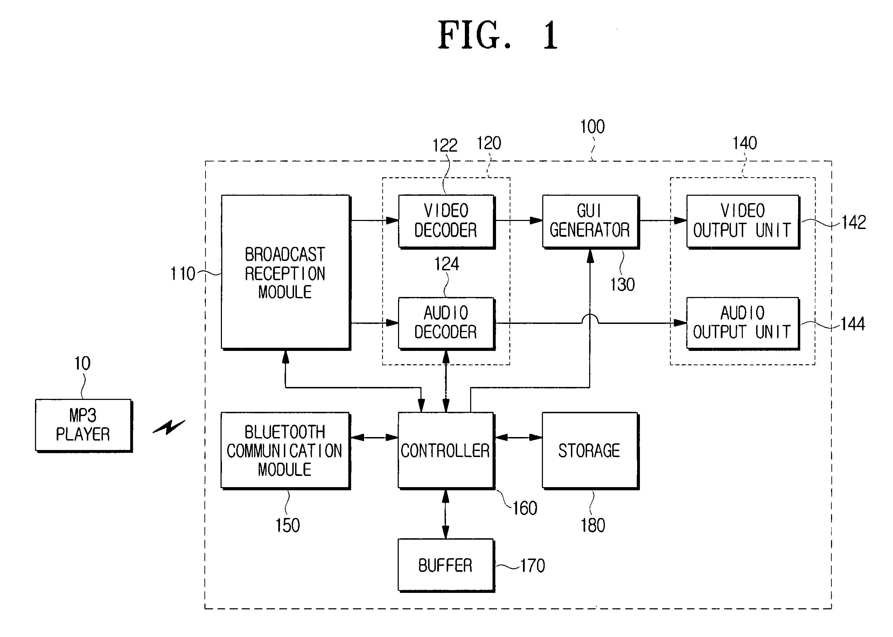

FIG. 1 is a block diagram of a DTV according to an exemplary embodiment of the present invention. Note that the DTV 100 of FIG. 1 can not only receive and provide a broadcast to a user but also reproduce an audio file received from a Moving Picture Experts Groups Layer 3 (MP3) player 10 wirelessly connected in real time.

The DTV 100 can reproduce an audio file being received according to a File Transfer Protocol (FTP) which is one of non real time protocols, in real time.

Namely, the DTV 100 can reproduce the file being received according to the FTP which does not support multimedia streaming, in real time.

The DTV 100 of FIG. 1 comprises a broadcast reception module 110, a decoder 120, a Graphic User Interface (GUI) generator 130, an output unit 140, a Bluetooth communication module 150, a controller 160, a buffer 170, and a storage unit 180. The broadcast reception module 110 receives a broadcast signal from a broadcast station or a satellite in a wired or wireless manner. The broadcast reception module 110 splits the received broadcast signal to video data, audio data, and other data and then outputs them.

The decoder 120 decodes the received data. The decoder 120 comprises a video decoder 122 and an audio decoder 124.

The video decoder 122 decodes and converts the input video data into a reproducible format. The audio decoder 124 decodes and converts the input audio data into a reproducible format. The video decoder 122 and the audio decoder 124 can receive data from the broadcast reception module 110 or the controller 160 which will be described.

The GUI generator 130 generates a GUI to be displayed on a screen and adds the generated GUI to the video decoded and output from the video decoder 122.
The output unit 140 outputs video and audio, and comprises a video output unit 142 and an audio output unit 144.

The video output unit 142 displays the video comprising the GUI output from the GUI generator 130 on a display (not shown), or outputs the video to an external device (e.g., another DTV) connected through an external output port (not shown). The audio output unit 144 outputs the audio output from the audio decoder 124 through a speaker (not shown), or outputs the audio to an external device connected through an external output port (not shown).

The Bluetooth communication module 150 is connected to the MP3 player 10, which provides Bluetooth function, to wirelessly communicate with the MP3 player 10. The Bluetooth communication module 150 performs radio communications with the MP3 player 10 according to Bluetooth protocol.

The controller 160 controls overall operation of the DTV 100. Specifically, the controller 160 controls the broadcast reception of the broadcast reception module 110, the communications of the Bluetooth communication module 150, the GUI generation of the GUI generator 130, and so forth.

The controller 160 stores audio data which is received from the MP3 player 10 via the Bluetooth communication module 150, to the buffer 170 or the storage unit 180. The storage unit 180 can be implemented using a recording medium (not shown) such as memory or Hard Disk Drive (HDD), or a controller (not shown) which stores audio data to the recording medium or reads the stored audio data from the recording medium.

Herein, the audio data can represent part of audio file. In other words, the audio file can comprise a plurality of audio data. When transmitting an audio file to the DTV 100, the MP3 player 10 divides the audio file into a plurality of audio data and transmits the divided audio data to the DTV 100 in succession.

To reproduce the audio file in real time, the controller 160 stores the audio data in the buffer 170. In contrast, to reproduce the audio file in non real time (the audio file is reproduced later after all of audio data constituting the audio file is received), the controller 160 stores the audio data to the storage unit 180.

In both cases of reproducing the audio file in real time and in non real time, the controller 160 receives the audio file from the MP3 player 10 via the Bluetooth communication module 150 according to the FTP. The controller 160 receives the audio data constituting the audio file to be reproduced in real time, according to the FTP as well.

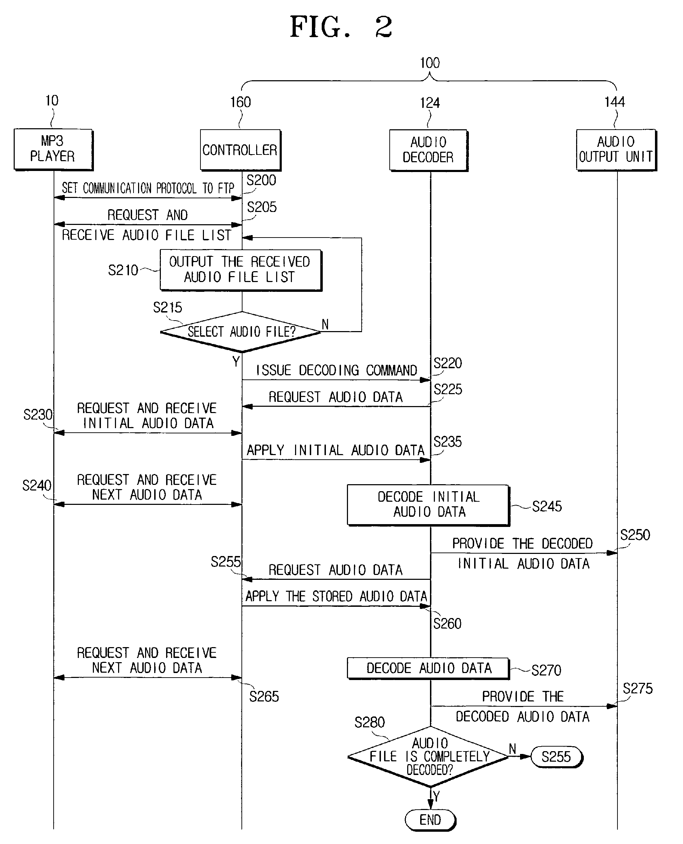

Now, the description explains how the DTV 100 of FIG. 1 reproduces the audio file being received according to the FTP, in real time, that is, how the DTV 100 reproduces the audio file in real time before all of the audio data constituting the audio file is completely received by referring to FIG. 2.

As shown in FIG. 2, the controller 160 sets the FTP as the communication protocol between the DTV 100 and the MP3 player 10 (operation S200). The controller 160 requests the audio file list to the MP3 player 10 via the Bluetooth communication module 150 and receives the audio file list (operation S205). Herein, the 'audio file list' indicates the list of the audio files stored to the MP3 player 10.

The communication protocol between the DTV 100 and the MP3 player 10 is set to the FTP in operation S200, and the FTP supports a function enabling the DTV 100 to receive a file list of the connected device. Accordingly, the controller 160 is able to request and receive the audio file list from the MP3 player 10 in operation S205. Next, the controller 160 controls the GUI generator 130 to output the audio file list received in operation S205 through the video output unit 142 (operation S210).

When the user selects one of the audio files in the audio file list displayed in operation S210 (operation S215-Y), the controller 160 issues a decoding command to the audio decoder 124 (operation S220).

The audio decoder 124 requests audio data to be decoded to the controller 160 (operation S225). The audio decoder 124 requests the audio data to be decoded to the controller 160 because a buffer (not shown) of the audio decoder 124 is unable to hold audio data to be decoded.

Upon receiving the request from the audio decoder 124, the controller 160 requests and receives initial audio data from the MP3 player 10 via the Bluetooth communication module 150, and stores the received initial audio data to the buffer 170 (operation S230). The 'initial audio data' indicates audio data at the foremost location in the audio data constituting the audio file selected by the user in operation S215.

Since the communication protocol between the DTV 100 and the MP3 player 10 is defined as the FTP in operation S200, the initial audio data is received according to the FTP in operation S230.

When the initial audio data is completely stored to the buffer 170, the controller 160 applies the initial audio data stored to the buffer 170 to the audio decoder 124 (operation S235). Next, the controller 160 requests and receives next audio data from the MP3 player 10 via the Bluetooth communication module 150, and stores the received next audio data to the buffer 170 (operation S240).

The 'next audio data' indicates audio data directly after the most recently received audio data in the file structure. Since the communication protocol between the DTV 100 and the MP3 player 10 is defined as the FTP in operation S200, the next audio data is also received according to the FTP in operation 240, as in operation S230.

After the operation S235, the audio decoder 124 decodes and converts the initial audio data into a reproducible format (operation S245). The completion of the operation S235 denotes the completion of storing the initial audio data in the buffer of the audio decoder 124.

After the operation S245, the audio decoder 124 provides the decoded initial audio data to the audio output unit 144 (operation S250). After the operation S250, the audio decoder 124 requests the next audio data to be decoded from the controller 160 (operation S255).

The execution of operation S255 should occur right after the completion of the operation S250. After the operation S255, the audio decoder 124 stops the decoding operation until the next audio data is received.

The controller 160, receiving the request from the audio decoder 124, sends the audio data stored in the buffer 170 to the audio decoder 124 (operation S260). Next, the controller 160 requests and receives next audio data from the MP3 player 10 via the Bluetooth communication module 150, and stores the received next audio data in the buffer 170 (operation S265).

As mentioned above, the next audio data indicates audio data directly after the most recently received audio data in the file structure, and the next audio data is also received according to the FTP in operation S265 as in the operations S230 and S240. If all of the audio data constituting the audio file is completely received, the operation S265 is not carried out.

After the operation S260, the audio decoder 124 decodes and converts the sent audio data into a reproducible format (operation S270). Next, the audio decoder 124 provides the decoded audio data to the audio output unit 144 (operation S275). When all of the audio data constituting the audio file is not completely decoded (operation S280-N), the operation S255 is resumed.

During the above operations, the audio output unit 144 reproduces and outputs the decoded audio data provided in operations S250 and S275 in real time.

As the communication protocol between the DTV 100 and the MP3 player 10 is designated to the FTP in operation S200, to conform to the FTP, the audio data is decoded after all audio data constituting the audio file is fully received. However, in this exemplary embodiment of the present invention, it is implemented to enable to reproduce the audio file being received according to the FTP in real time by 1) sending the audio data completely received from the MP3 player 10 to the audio decoder 124 (operations S235 and S260) and 2) decoding the sent audio data at the audio decoder 124 (operations S245 and S270) right away.

In this exemplary embodiment of the present invention, the audio file comprises a plurality of audio data. The size of the audio data is not fixed but can be determined by taking into account the specification of the audio file, the communication protocol, and the capabilities of the MP3 player and the DTV. Note that the size of the audio data can be changed according to the condition of the radio channel.

In this exemplary embodiment of the present invention, the audio data transmitted from the MP3 player to the DTV at a time are decoded all together. That is, to ease the understanding, the reception unit and the decoding unit of the audio file are set to one identical audio data by way of example. Accordingly, the reception unit and the decoding unit of the audio file may differ from each other. For instance, one audio data is transmitted from the MP3 player to the DTV at a time, and half of the audio data is decoded at a time. In this case, the received audio data not being decoded is buffered.

In this exemplary embodiment of the present invention, while the initial audio data is received and stored and then next audio data is further received and stored, the number of the next audio data, which is further received and stored after the initial audio data is received and stored, can be changed. In a poor channel condition, it may be desirable to increase the number of the next audio data.

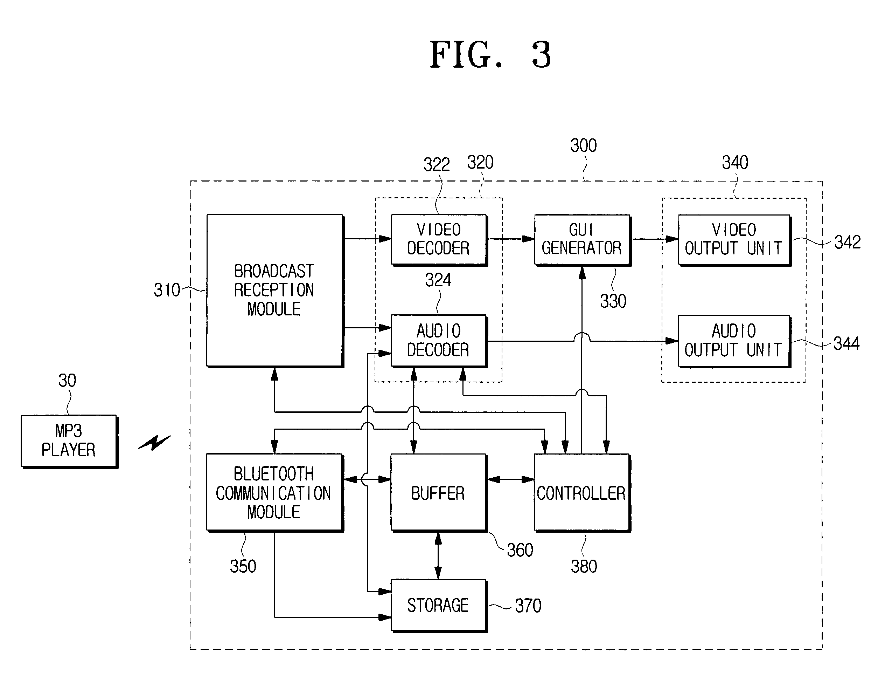

Now, another exemplary embodiment of the present invention is described in detail by referring to FIG. 3. FIG. 3 is a block diagram of a DTV according to another exemplary embodiment of the present invention. Similar to the DTV 100 of FIG. 1, the DTV 300 of FIG. 3 can receive and provide a broadcast to a user. Also, the DTV 300 of FIG. 3 can seamlessly reproduce an audio file, which is received from an MP3 player 30 connected by radio, in real time.

The DTV 300 can seamlessly reproduce the audio file which is being received according to the non real time transfer protocol FTP, in real time. In detail, the DTV 300 can seamlessly reproduce a file being received according to the FTP which is the protocol not supporting the multimedia streaming, in real time.

As shown in FIG. 3, the DTV 300 comprises a broadcast reception module 310, a decoder 320, a GUI generator 330, an output unit 340, a Bluetooth communication module 350, a buffer 360, a storage unit 370, and a controller 380.

The broadcast reception module 310 receives a broadcast signal from a broadcast station or a satellite in a wired or wireless manner. The broadcast reception module 310 divides the received broadcast signal to video data, audio data, and other data, and outputs the divided data.

The decoder 320 decodes the divided data. The decoder 320 comprises a video decoder 322 and an audio decoder 324.

The video decoder 322 converts the input video data into a reproducible format by decoding the video data. The audio decoder 324 converts the input audio data into a reproducible format by decoding the audio data. The video decoder 322 and the audio decoder 324 can receive data from the broadcast reception module 310, or fetch data from the buffer 360, which will be explained.

The GUI generator 330 generates GUI to be displayed on a screen and adds the generated GUI to the video which is decoded and output from the video decoder 322.

The output unit 340 outputs video and audio. The output unit 340 comprises a video output unit 342 and an audio output unit 344.

The video output unit 342 displays the video comprising the GUI output from the GUI generator 330 on a display (not shown), or outputs the video to an external device (e.g., another DTV) connected through an external output port (not shown). The audio output unit 344 outputs the audio output from the audio decoder 324 through a speaker (not shown), or outputs the audio to an external device connected through an external output port (not shown).

The Bluetooth communication module 350 is connected to the MP3 player 30, which is a kind of Bluetooth device, to wirelessly communicate with the MP3 player 350 in the Bluetooth protocol.

The controller 380 controls overall operation of the DTV 300. Specifically, the controller 380 controls the broadcast reception of the broadcast reception module 310, the communication of the Bluetooth communication module 350, the GUI generation of the GUI generator 330, and so forth.

Particularly, the controller 380 controls the Bluetooth communication module 350 to store the audio data received from the MP3 player 30 via the Bluetooth communication module 350, in the buffer 360 or the storage unit 370. The buffer 360 is a storage medium which stores the received audio data in a First-In First-Out (FIFO) manner.

The storage unit 370 can be implemented using a recording medium (not shown) such as memory or Hard Disk Drive (HDD), and a controller (not shown) for storing or reading audio data to and from the recording medium.

In another exemplary embodiment of the present invention, the audio data indicates part of the audio file. That is, the audio file can comprise a plurality of audio data. When the audio file is transmitted to the DTV 300, the MP3 player 30 divides the audio file into several segments of audio data and transmits the divided audio data to the DTV 300 one by one.

To reproduce the audio file in real time, the audio data received via the Bluetooth communication module 350 is stored in the buffer 360 under the control of the controller 380. By contrast, to reproduce the audio file in non real time (to reproduce the audio file after all of audio data constituting the audio file is received), the audio data received via the Bluetooth communication module 350 are stored in the storage unit 370 under the control of the controller 380.

In both cases where the audio file is reproduced in real time and in non real time, the audio file is received from the MP3 player 30 via the Bluetooth communication module 350 according to the FTP. Namely, the audio data of the audio file to be reproduced in real time are received according to the FTP as well.

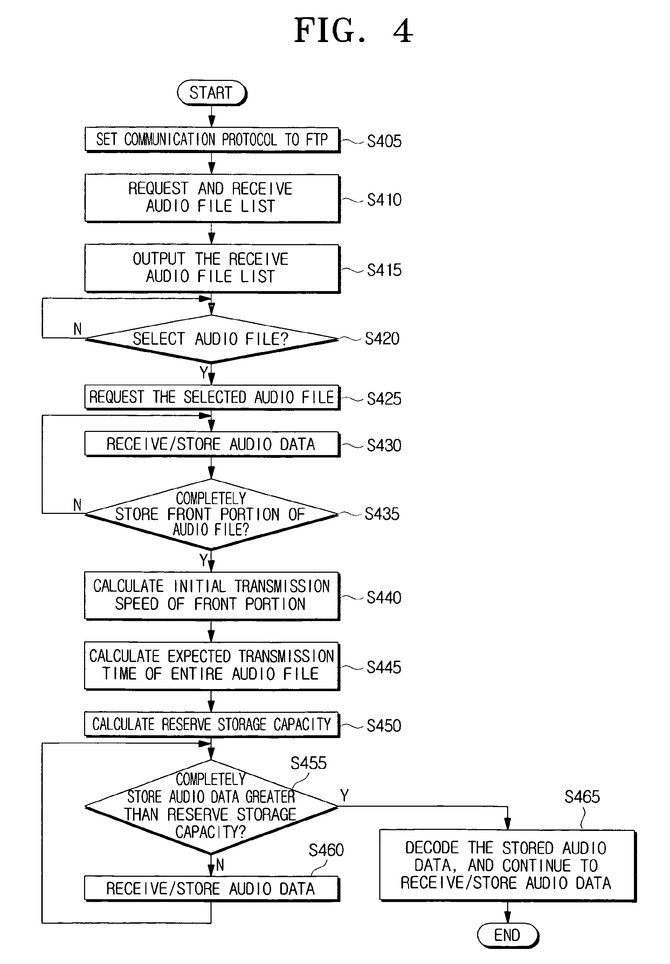

Hereafter, the description explains how the DTV 300 of FIG. 3 seamlessly reproduces the audio file being received according to the FTP in real time by referring to FIG. 4.

In FIG. 4, the controller 380 designates the FTP as the communication protocol between the DTV 300 and the MP3 player 30 (operation S405). The controller 380 requests and receives an audio file list from the MP3 player 30 via the Bluetooth communication module 350 (operation S410). Herein, the 'audio file list' indicates a list of audio files stored at the MP3 player 30.

The communication protocol between the DTV 300 and the MP3 player 30 is set to FTP in operation S405, and the FTP supports a function of receiving the file list of the connected device. Hence, the controller 380 is able to request and receive the audio file list from the MP3 player 30 in operation S410.

Next, the controller 380 controls the GUI generator 330 to output the received audio file list through the video output unit 342 (operation S415). When the user selects one of the audio files in the audio file list displayed on the screen (operation S420-Y), the controller 380 requests the selected audio file to the MP3 player 30 via the Bluetooth communication module 350 (operation S425).

In response to the operation S425, audio data constituting the selected audio file are received from the MP3 player 30 via the Bluetooth communication module 350 and stored in the buffer 360 (operation S430).

Since the communication protocol between the DTV 300 and the MP3 player 30 is set to FTP in operation S405, the request in operation S425 and the reception in operation S430 are performed according to the FTP.

During the operation S430, the controller 380 determines whether the front portion of the audio file is completely stored in the buffer 360 (operation S435).

The 'front portion of the audio file' (hereafter, referred to as a front portion) can be arbitrary defined. For instance, 5% of the audio file can be set as the front portion. In this case, when the number of items or elements of audio data constituting the audio file is 400, the front portion ranges from the first item of audio data to the 20<sup>th</sup> item of audio data.

Determining that the front portion is not completely stored in the buffer 360 (operation S435-N), the operation S430 is repeated.

Determining that the front portion is completely stored in the buffer 360 (operation S435-Y), the controller 380 calculates an initial transmission speed of the front portion using the storage capacity of the front portion completely stored and a time taken to completely store the front portion (operation S440).

In operation S440, the initial transmission speed can be calculated by dividing the storage capacity, or size, of the front portion completely stored by the time taken to completely store the front portion as expressed in Equation 1.

[Equation 1]

$$\text{initial transmission speed} = \frac{\text{storage capacity of front portion completely stored}}{\text{time to taken to completely store the front portion}}$$

Next, the controller 380 calculates an expected transmission time of the entire audio file using the initial transmission speed calculated in operation S440 and the total capacity, or size, of the audio file selected in operation S420 (operation S445).

Herein, the 'expected transmission time of the entire audio file' (hereafter, referred to as an 'expected transmission time') is an expected time taken to receive the entire audio file through the Bluetooth communication module 350 and completely store the audio file in the buffer 360.

Information relating to the total capacity of the audio file is recorded in the front portion of the audio file, and thus can be extracted therefrom. The expected transmission time can be calculated by dividing the total capacity, or size, of the audio file by the initial transmission speed as expressed in Equation 2.

[Equation 2]

$$\text{expected transmsision time} = \frac{\text{total capacity of audio file}}{\text{initial transmission speed}}$$

Next, the controller 380 calculates a reserve storage capacity using the expected transmission time calculated in operation S445, the reproduction time of the audio file selected in operation S420, and the initial transmission speed calculated in operation S440 (operation S450).

The reserve storage capacity is a storage capacity to enable the seamless reproduction of the audio file selected in operation S420 in real time. To seamlessly reproduce the audio file in real time, an amount of audio data of the audio file selected in operation S420 needs to be stored in the buffer 360 up to the reserve storage capacity before the audio decoder 324 decodes the audio data.

In other words, when the audio decoder 324 starts to decode the audio data after the audio data of the audio file selected in operation S420 are completely stored to the buffer 360 up to the reserve storage capacity, the audio can be reproduced seamlessly.

Information relating to the reproduction time of the audio file is recorded in the front portion of the audio file. Hence, the information can be extracted from the front portion or calculated by dividing the total capacity of the audio file by the coding rate of the audio file.

The reserve storage capacity can be calculated by multiplying a time acquired by subtracting the reproduction time of the audio file from the expected transmission time, by the initial transmission speed as expressed in Equation 3.

[Equation 3]

reserve storage capacity

= (expected transmsision time - reproduction time of audio file) * initial transmission speed

Hereafter, to ease the understanding of the exemplary embodiment of the present invention, it is assumed that the total capacity, or size, of the audio file is 4Mb, the reproduction time of the audio file is 200s, and the initial transmission speed calculated in operation S435 is 19Kbps. The expected transmission time is 211s (=4Mb/19Kbps) based on Equation 2, and the reserve storage capacity is 209Kb (=(211s-200s)*19Kbps) based on Equation 3.

Next, the controller 380 determines whether audio data greater than the reserve storage capacity is completely stored (operation S455). Upon determining that audio data greater than the reserve storage capacity is not completely stored (operation S455-N), the controller 380 controls the Bluetooth communication module 350 to keep receiving the audio data from the MP3 player 30 and to store the audio data in the buffer 160 (operation S460).

In contrast, when determining the complete storage of audio data greater than the reserve storage capacity (operation S455-Y), the controller 380 controls the audio decoder 324 to commence the decoding of the audio data stored in the buffer 360 and controls the Bluetooth communication module 350 to keep receiving the audio data from the MP3 player 30 and to store the audio data in the buffer 160 (operation S465).

As one can see from operation S465, the audio data reception and storing by the Bluetooth communication module 350 and the audio data decoding by the audio decoder 324 are carried out together after a certain time.

In more detail, after audio data greater than the reserve storage capacity are completely stored in the buffer 360, the audio data is decoded at the audio decoder 324 while the audio data is being received and stored at the Bluetooth communication module 350. In other words, in the process of the audio data decoding at the audio decoder 324, the audio data is received and stored at the Bluetooth communication module 350.

The audio data, which is decoded by the audio decoder 324 and converted into the reproducible format in operation S465, is applied to the audio output unit 344 and reproduced through a speaker in real time.

In operation S405, the communication protocol between the DTV 300 and the MP3 player 30 is set to FTP. To conform to FTP, the audio data is decoded after every audio data constituting the audio file is completely received.

However, in another exemplary embodiment of the present invention, the stored audio data is decoded when 1) the reception and storing of the audio data is performed together with the audio data decoding, that is, the audio data is decoded during the process of audio data reception and storing, and 2) audio data greater than the reserve storage capacity is completely stored in the buffer. Therefore, the audio can be reproduced seamlessly in real time.

While the decoding of the stored audio data is commenced when audio data greater than the reserve storage capacity is completely stored in the buffer in another exemplary embodiment of the present invention, it is possible to commence the decoding of the stored audio data when audio data over 120% of the reserve storage capacity is completely stored in the buffer so as to further lower the probability of the interrupted audio reproduction.

In another exemplary embodiment of the present invention, the audio file comprises a plurality of audio data. Note that the size of the audio data is not fixed but can be set by taking into account the specification of the audio file, the communication protocol, and the capabilities of the MP3 player and the DTV.

Also, the size of the audio data can be changed according to the radio channel condition.

The reception unit of the audio file may differ from the decoding unit of the audio file. For instance, one audio data is transmitted from the MP3 player to the DTV at one time, and only half of the audio data is decoded at one time. In this case, the received audio data being not decoded is left in the buffer.

So far, the real time reproduction of the file being received according to the non real time transfer protocol has been illustrated.

In the exemplary embodiments of the present invention, while the audio file received according to FTP is reproduced in real time by way of example, the present invention is applicable to a video file in addition to the audio file. In the exemplary embodiments of the present invention, FTP is a kind of the non real time transfer protocol, and the present invention is applicable to other non real time transfer protocol.

While the radio communication between the MP3 player and the DTV is performed in the Bluetooth manner in the exemplary embodiments of the present invention, the Bluetooth scheme is used merely as an example of the radio communication scheme. The present invention is applicable to other wireless or wired communications between the MP3 player and the DTV.

Also, the MP3 player is merely an example of the external device connectable to the DTV, and other external device than the MP3 player can be adopted. The DTV is a kind of video apparatus, and the present invention is applicable to other video apparatus than the DTV.

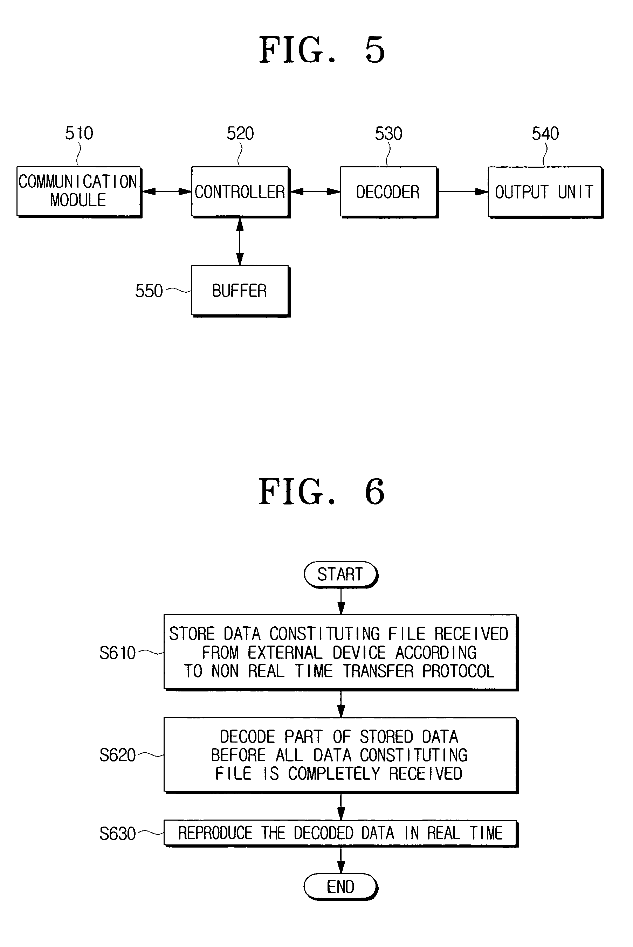

Hereafter, yet another exemplary embodiment of the present invention is illustrated by referring to FIGS. 5 and 6.

As shown in FIG. 5, a video apparatus according to yet another exemplary embodiment of the present invention comprises a communication module 510, a controller 520, a decoder 530, an output unit 540, and a buffer 550.

The communication module 510 is connected to an external device to communicate with the external device. The buffer 550 is a storage medium for storing data received through the communication module 510. The decoder 530 decodes the applied data.

The controller 520 stores data constituting a file received from the external device via the communication module 510 according to a non real time transfer protocol, in the buffer 550. Before every data constituting the file is completely stored, the controller 520 sends part of the data stored in the buffer 550 to the decoder 530.

The output unit 540 reproduces the data decoded at the decoder 530 in real time. In a reproduction method of FIG. 6, the video apparatus stores data constituting a file received from the external device according to the non real time transfer protocol (operation S610). Next, the video apparatus decodes part of the stored data before all of data constituting the file is completely received (operation S620). The video apparatus reproduces the decoded data in real time (operation S630).

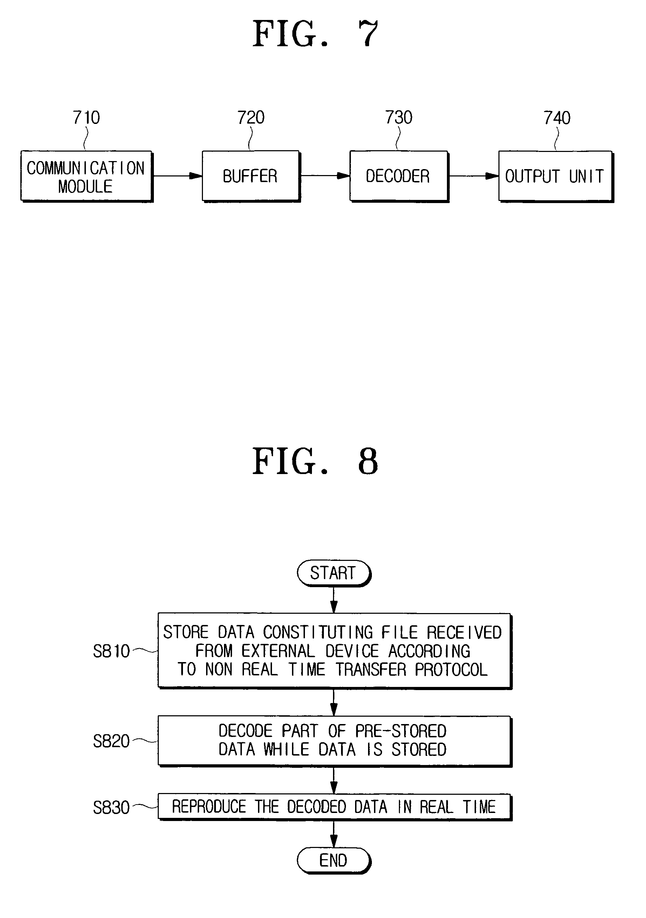

Now, still another exemplary embodiment of the present invention is illustrated by referring to FIGS. 7 and 8.

A video apparatus of FIG. 7 comprises a communication module 710, a buffer 720, a decoder 730, and an output unit 740.

The communication module 710 is connected to an external device to communicate with the external device. The buffer 720 stores data received through the communication module 710.

The decoder 730 decodes part of data stored in the buffer 720 while data constituting a file received from the external device via the communication module 710 according to the non real time transfer protocol are stored in the buffer 720. The output unit 740 reproduces the data decoded at the decoder 760 in real time.

In a reproduction method of FIG. 8, the video apparatus receives and stores data constituting a file from the external device according to the non real time transfer protocol (operation S810). As the data is being stored, the video apparatus decodes part of pre-stored data (operation S820). Next, the video apparatus reproduces the decoded data in real time (operation S830).

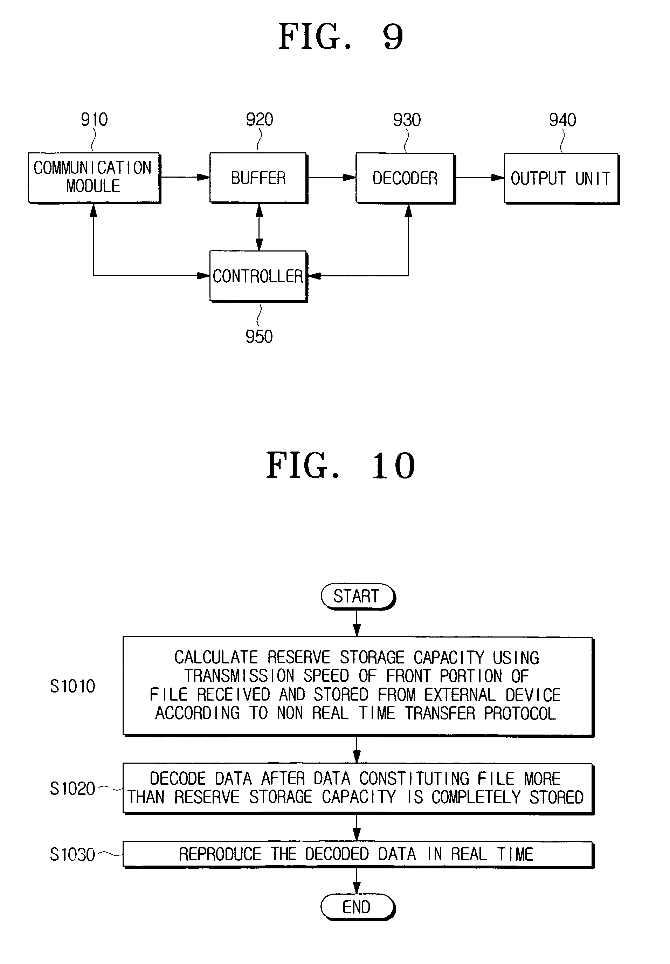

Hereafter, a further exemplary embodiment of the present invention is described by referring to FIGS. 9 and 10.

A video apparatus of FIG. 9 comprises a communication module 910, a buffer 920, a decoder 930, an output unit 940, and a controller 950.

The communication module 910 is connected to an external device to communicate with the external device. The buffer 920 stores data constituting a file received from the external device via the communication module 910 according to the non real time transfer protocol.

The decoder 930 decodes part of data stored in the buffer 920. The output unit 940 reproduces the data decoded at the decoder 930 in real time.

The controller 950 calculates a reserve storage capacity using a transmission speed of the front portion of the file received through the communication module 910 and stored to the buffer 920, and controls the decoder 930 to commence the decoding after data constituting the file greater than the reserve storage capacity is completely stored to the buffer 920.

In a reproduction method of FIG. 10, the video apparatus calculates the reserve storage capacity using the transmission speed of the front portion of the file received and stored from the external device according to the non real time transfer protocol (operation S1010).

The video apparatus commences the decoding after the data constituting the file is completely stored beyond the reserve storage capacity (operation S1020). Next, the video apparatus reproduces the decoded data in real time (operation S1030).

Therefore, the file being received according to the non real time transfer protocol can be reproduced in real time.

As set forth above, the file being received according to the non real time transfer protocol can be reproduced in real time. Hence, it is possible to reproduce in real time the file received from the external device which does not support the communication of the real time transfer protocol but merely supports the file transmission according to the non real time transfer protocol.

When the file is reproduced in real time, the list of the files stored to the storage device is provided user, to thus increase the user convenience.

In addition, the audio is seamlessly reproduced in real time by performing the data reception and storing together with the data decoding, that is, by decoding the audio data in the process of the data reception/storing.

Furthermore, the audio is seamlessly reproduced in real time by commencing the decoding of the stored audio data when data greater than the reserve storage capacity is completely stored in the buffer.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art, while falling within the scope of the appended claims.

**Claims**

**1.** An apparatus comprising:

a communication module (150, 350, 510, 710) connectable to an external device (10, 30) to communicate with the external device;
a buffer (170, 360, 550, 720) for storing data received through the communication module, the data comprising a file received from the external device via the communication module according to a non real time transfer protocol;
a decoder (120, 320, 530, 730) for decoding data in the buffer before all the data comprising the file is completely received;
a controller (160, 380, 520) arranged to control the decoder to commence the decoding after an amount of data of the file that exceeds a reserve storage size is completely stored in the buffer and, to calculate the reserve storage size using a transmission speed of a front portion of the file which is received through the communication module and stored in the buffer; and
an output unit (140, 340, 540, 740) for providing the data decoded at the decoder in real time.

2. The apparatus of claim 1, wherein the non real time transfer protocol is File Transfer Protocol (FTP).

3. The apparatus of any one of the preceding claims, wherein the controller (160, 380, 520) is further arranged to control storage of data in the buffer, the controller being configured to provide a part of the data stored in the buffer to the decoder while the data is being stored in the buffer or received by the communication module.

4. The apparatus of claim 3, wherein the controller is arranged to control the communication module to receive a list of files stored in the external device from the external device according to the non real time transfer protocol, and to output the received list through the output unit.

5. The apparatus of claim 3 or 4, wherein when data provided from the controller is completely decoded, the decoder is arranged to provide the decoded data to the output unit and to request additional data to be decoded from the controller.

6. The apparatus of any one of the preceding claims, wherein the communication module is connected to the external device to enable radio communication with the external device.

7. The apparatus of claim 6, wherein the communication module is connected to the external device to enable radio communication using Bluetooth.

8. The apparatus of any one of the preceding claims, wherein the communication module is arranged to receive data from the external device according to the non real time transfer protocol while the decoder decodes the data.

9. A method of processing data, comprising:

storing data constituting a file which is received from an external device according to a non real time transfer protocol;
decoding part of the data being stored before all of the data constituting the file is completely received wherein the part of the data corresponds to a data size that exceeds a reserve storage size; and
providing the decoded data in real time,
wherein the reserve storage size is calculated using a transmission speed of a front portion of the file.

10. The reproduction method of claim 9, wherein the non real time transfer protocol is File Transfer Protocol (FTP).

11. The method of any one of claims 9 or 10, further comprising:

receiving a list of files stored in the external device from the external device according to the non real time transfer protocol; and
outputting the received list.

12. The method of any one of claims 9 to 11, wherein the decoding operation comprises:

transmitting, by a controller which stores the data constituting the received file in a buffer, part of the data stored in the buffer to a decoder which decodes the data before all of the data constituting the file is completely received;
decoding, by the decoder, the data transmitted from the controller;

when the data applied from the controller is completely decoded, providing, by the decoder, the decoded data to an output unit which reproduces the decoded data in real time; and

requesting, by the decoder, additional data to be decoded to the controller.

13. The method of any one of claims 9 to 12, wherein the storing operation comprises storing data constituting a file which is wirelessly received from the external device.

14. The method of claim 11, wherein the storing operation comprises storing data constituting a file which is wirelessly received from the external device using Bluetooth.

15. The method of any one of claims 9 to 14, wherein an amount of data is pre-stored, and the pre-stored data is decoded while the data constituting a file is stored.

16. The method of claim 15, wherein the decoding operation comprises:

receiving and storing data from the external device according to the non real time transfer protocol even while part of pre-stored data is decoded.


**Patentansprüche**

1. Eine Vorrichtung, umfassend:

ein Kommunikationsmodul (150, 350, 510, 710), anschließbar an ein externes Gerät (10, 30), um mit dem externen Gerät zu kommunizieren,

einen Puffer (170, 360, 550, 720) zum Speichern der über das Kommunikationsmodul erhaltenen Daten, die Daten umfassend eine von dem externen Gerät über das Kommunikationsmodul einem Nicht-Echtzeit-Übertragungsprotokoll entsprechend eingegangene Datei,

einen Decodierer (120, 320, 530, 730) für das Decodieren von Daten im Puffer, bevor alle Daten, aus denen die Datei besteht, vollständig eingegangen sind,

einen Controller (160, 380, 520), angeordnet zur Steuerung des Decodierers, sodass dieser das Decodieren der Daten beginnt, sobald eine die Reservespeichergöße übersteigende Datenmenge der Datei vollständig im Puffer gespeichert ist, und zur Berechnung der Reservespeichergröße mithilfe der Übertragungsgeschwindigkeit eines vorderen Teils der Datei, der über das Kommunikationsmodul eingeht und im Puffer gespeichert wird, sowie

eine Ausgabeeinheit (140, 340, 540, 740) zur Bereitstellung der am Decodierer decodierten Daten in Echtzeit.

2. Vorrichtung nach Anspruch 1, bei welcher das File Transfer Protocol (FTP) als Nicht-Echtzeit-Übertragungsprotokoll dient.

3. Vorrichtung nach einem der vorhergehenden Ansprüche, bei welcher der Controller (160, 380, 520) ferner so angeordnet ist, dass er die Speicherung der Daten im Puffer steuert, der Controller so ausgelegt, dass er dem Decodierer einen Teil der im Puffer gespeicherten Daten bereitstellt, während die Daten im Puffer gespeichert werden oder beim Kommunikationsmodul eingehen.

4. Vorrichtung nach Anspruch 3, bei welcher der Controller so angeordnet ist, dass er das Kommunikationsmodul steuert, vom externen Gerät eine im externen Gerät gespeicherte Dateiliste dem Nicht-Echtzeit-Übertragungsprotokoll entsprechend zu empfangen, und dass er die empfangene Liste über die Ausgabeeinheit ausgibt.

5. Vorrichtung nach Anspruch 3 oder 4, bei welcher der Decodierer so angeordnet ist, dass er, sobald die vom Controller bereitgestellten Daten vollständig decodiert sind, die decodierten Daten der Ausgabeeinheit bereitstellt und vom Controller zusätzliche Daten zur Decodierung anfordert.

6. Vorrichtung nach einem der vorhergehenden Ansprüche, bei welcher das Kommunikationsmodul mit dem externen Gerät verbunden ist, um eine Kommunikation per Funk mit dem externen Gerät zu ermöglichen.

7. Vorrichtung nach Anspruch 6, bei welcher das Kommunikationsmodul mit dem externen Gerät verbunden ist, um eine Kommunikation per Funk mithilfe von Bluetooth zu ermöglichen.

**8.** Vorrichtung nach einem der vorhergehenden Ansprüche, bei welcher das Kommunikationsmodul so angeordnet ist, dass es Daten vom externen Gerät dem Nicht-Echtzeit-Übertragungsprotokoll entsprechend empfängt, während der Decodierer die Daten decodiert.

**9.** Verfahren zur Verarbeitung von Daten, umfassend:

Speichern von Daten, die eine Datei darstellen, welche von einem externen Gerät gemäß einem Nicht-Echtzeit-Übertragungsprotokoll eingeht,
Decodieren eines Teils der Daten, die gespeichert werden, bevor alle Daten, welche die Datei darstellen, vollständig eingegangen sind, wobei der Teil der Daten einer Datengröße entspricht, die eine Reservespeichergröße überschreitet, und
Bereitstellen der decodierten Daten in Echtzeit,
wobei die Reservespeichergröße mithilfe der Übertragungsgeschwindigkeit eines vorderen Teils der Datei berechnet wird.

**10.** Nachbildungsverfahren nach Anspruch 9, bei welchem das File Transfer Protocol (FTP) als Nicht-Echtzeit-Übertragungsprotokoll dient.

**11.** Verfahren nach einem beliebigen der Ansprüche 9 oder 10, ferner umfassend:

Empfangen einer Liste der im externen Gerät gespeicherten Dateien vom externen Gerät dem Nicht-Echtzeit-Übertragungsprotokoll entsprechend, und Ausgabe der empfangenen Liste.

**12.** Verfahren nach einem beliebigen der Ansprüche 9 bis 11, bei welchem der Decodierungsvorgang Folgendes umfasst:

Übertragen eines Teils der im Puffer gespeicherten Daten durch einen Controller, der die Daten, welche die empfangene Datei darstellen, in einem Puffer speichert, an einen Decodierer, der die Daten decodiert, bevor alle Daten, welche die Datei darstellen, vollständig eingegangen sind,
Decodieren der vom Controller übertragenen Daten durch den Decodierer;
Bereitstellen der decodierten Daten, sobald die vom Controller gelieferten Daten vollständig decodiert sind, durch den Decodierer an eine Ausgabeeinheit, die die decodierten Daten in Echtzeit nachbildet, sowie Anfordern weiterer Daten beim Controller durch den Decodierer zur Decodierung.

**13.** Verfahren nach einem beliebigen der Ansprüche 9 bis 12, bei welchem der Speichervorgang das Speichern von Daten umfasst, die eine Datei darstellen, und die vom externen Gerät drahtlos eingehen.

**14.** Verfahren nach Anspruch 11, bei welchem der Speichervorgang das Speichern von Daten umfasst, die eine Datei darstellen, und die vom externen Gerät mithilfe von Bluetooth drahtlos eingehen.

**15.** Verfahren nach einem beliebigen der Ansprüche 9 bis 14, bei welchem eine Datenmenge vorgespeichert wird und die bereits gespeicherten Daten decodiert werden, während die Daten, die eine Datei darstellen, gespeichert werden.

**16.** Verfahren nach Anspruch 15, bei welchem der Decodierungsvorgang Folgendes umfasst:

Empfangen und Speichern von Daten vom externen Gerät dem Nicht-Echtzeit-Übertragungsprotokoll entsprechend, selbst während ein Teil der vorgespeicherten Daten decodiert wird.

**Revendications**

**1.** Appareil comprenant :

un module de communication (150, 350, 510, 710) apte à être connecté à un dispositif externe (10, 30) afin de communiquer avec le dispositif externe ;
une mémoire-tampon (170, 360, 550, 720) pour stocker des données reçues par l'intermédiaire du module de communication, les données englobant un fichier reçu à partir du dispositif externe via le module de communication en fonction d'un protocole de transfert en temps non réel ;

un décodeur (120, 320, 530, 730) pour décoder des données dans la mémoire-tampon avant que l'intégralité des données englobant le fichier ne soit complètement reçue ;

un contrôleur (160, 380, 520) agencé de façon à piloter le décodeur afin de commencer le décodage une fois qu'une quantité de données du fichier qui dépasse une taille de stockage de réserve a été complètement stockée dans la mémoire-tampon et, calculer la taille de stockage de réserve grâce à l'utilisation d'une vitesse de transmission d'une portion frontale du fichier qui est reçue par l'intermédiaire du module de communication et stockée dans la mémoire-tampon ; et

une unité de sortie (140, 340, 540, 740) pour fournir les données décodées, au niveau du décodeur, en temps réel.

2. Appareil selon la revendication 1, le protocole de transfert en temps non réel étant FTP, File Transfer Protocol (protocole de transfert de fichiers).

3. Appareil selon l'une quelconque des revendications précédentes, le contrôleur (160, 380, 520) étant agencé en outre de façon à piloter le stockage de données dans la mémoire-tampon, le contrôleur étant configuré de façon à fournir une partie des données stockées dans la mémoire-tampon au décodeur pendant que les données sont en train d'être stockées dans la mémoire-tampon ou reçues par le module de communication.

4. Appareil selon la revendication 3, le contrôleur étant agencé de façon à piloter le module de communication afin de recevoir, à partir du dispositif externe, une liste de fichiers stockés dans le dispositif externe, en fonction du protocole de transfert en temps non réel, et produire la liste reçue par l'intermédiaire de l'unité de sortie.

5. Appareil selon la revendication 3 ou 4, lorsque des données fournies à partir du contrôleur sont complètement décodées, le décodeur étant agencé de façon à fournir les données décodées à l'unité de sortie, et à demander auprès du contrôleur des données additionnelles destinées à être décodées.

6. Appareil selon l'une quelconque des revendications précédentes, le module de communication étant connecté au dispositif externe afin d'autoriser des communications radio avec le dispositif externe.

7. Appareil selon la revendication 6, le module de communication étant connecté au dispositif externe afin d'autoriser des communications radio grâce à l'utilisation de Bluetooth.

8. Appareil selon l'une quelconque des revendications précédentes, le module de communication étant agencé de façon à recevoir des données à partir du dispositif externe en fonction du protocole de transfert en temps non réel pendant que le décodeur décode les données.

9. Procédé de traitement de données, comprenant les actions consistant à :

stocker des données, constituant un fichier, qui sont reçues à partir d'un dispositif externe en fonction d'un protocole de transfert en temps non réel ;

décoder une partie des données en train d'être stockées avant que l'intégralité des données constituant le fichier ne soit complètement reçue, cas dans lequel la partie des données correspond à une taille de données qui dépasse une taille de stockage de réserve ; et

fournir les données décodées en temps réel,

cas dans lequel la taille de stockage de réserve est calculée grâce à l'utilisation d'une vitesse de transmission d'une portion frontale du fichier.

10. Procédé de reproduction selon la revendication 9, le protocole de transfert en temps non réel étant FTP, File Transfer Protocol (protocole de transfert de fichiers).

11. Procédé selon l'une quelconque des revendications 9 ou 10, comprenant en outre les actions consistant à :

recevoir, à partir du dispositif externe, une liste de fichiers stockés dans le dispositif externe, en fonction du protocole de transfert en temps non réel ; et

produire la liste reçue.

12. Procédé selon l'une quelconque des revendications 9 à 11, l'opération de décodage comprenant :

la transmission, par un contrôleur qui stocke les données constituant le fichier reçu dans une mémoire-tampon, d'une partie des données stockées dans la mémoire-tampon vers un décodeur qui décode les données avant que l'intégralité des données constituant le fichier ne soit complètement reçue ;

le décodage, par le décodeur, des données transmises à partir du contrôleur ;

lorsque les données appliquées à partir du contrôleur sont complètement décodées, la fourniture, par le décodeur, des données décodées à une unité de sortie qui reproduit les données décodées en temps réel ; et

la demande, faite par le décodeur auprès du contrôleur, pour des données additionnelles destinées à être décodées.

**13.** Procédé selon l'une quelconque des revendications 9 à 12, l'opération de stockage comprenant le stockage de données constituant un fichier qui est reçu en mode sans fil à partir du dispositif externe.

**14.** Procédé selon la revendication 11, l'opération de stockage comprenant le stockage de données constituant un fichier qui est reçu en mode sans fil à partir du dispositif externe lequel utilise Bluetooth.

**15.** Procédé selon l'une quelconque des revendications 9 à 14, une quantité de données étant pré-stockée, et les données pré-stockées étant décodées pendant que les données constituant un fichier sont stockées.

**16.** Procédé selon la revendication 15, l'opération de décodage comprenant :

la réception et le stockage de données à partir du dispositif externe en fonction du protocole de transfert en temps non réel même pendant qu'une partie de données pré-stockées est décodée.

# FIG. 1

# FIG. 2

SET COMMUNICATION PROTOCOL TO FTP — S200

REQUEST AND
RECEIVE AUDIO FILE LIST — S205

S210 — OUTPUT THE RECEIVED AUDIO FILE LIST

S215 — SELECT AUDIO FILE? — N

Y — ISSUE DECODING COMMAND — S220

REQUEST AUDIO DATA — S225

S230 — REQUEST AND RECEIVE INITIAL AUDIO DATA

APPLY INITIAL AUDIO DATA — S235

S240 — REQUEST AND RECEIVE NEXT AUDIO DATA

DECODE INITIAL AUDIO DATA — S245

PROVIDE THE DECODED INITIAL AUDIO DATA — S250

S255 — REQUEST AUDIO DATA

APPLY THE STORED AUDIO DATA — S260

REQUEST AND RECEIVE NEXT AUDIO DATA

DECODE AUDIO DATA — S270

S265

PROVIDE THE DECODED AUDIO DATA — S275

S280 — AUDIO FILE IS COMPLETELY DECODED? — N — S255

Y — END

# FIG. 3

# FIG. 4

START

SET COMMUNICATION PROTOCOL TO FTP — S405

REQUEST AND RECEIVE AUDIO FILE LIST — S410

OUTPUT THE RECEIVE AUDIO FILE LIST — S415

SELECT AUDIO FILE? — S420 (N)

REQUEST THE SELECTED AUDIO FILE — S425

RECEIVE/STORE AUDIO DATA — S430

COMPLETELY STORE FRONT PORTION OF AUDIO FILE? — S435 (N)

CALCULATE INITIAL TRANSMISSION SPEED OF FRONT PORTION — S440

CALCULATE EXPECTED TRANSMISSION TIME OF ENTIRE AUDIO FILE — S445

CALCULATE RESERVE STORAGE CAPACITY — S450

COMPLETELY STORE AUDIO DATA GREATER THAN RESERVE STORAGE CAPACITY? — S455

Y

DECODE THE STORED AUDIO DATA, AND CONTINUE TO RECEIVE/STORE AUDIO DATA — S465

N

RECEIVE/STORE AUDIO DATA — S460

END

# FIG. 5

```
   510              520              530              540
┌──────────────┐  ┌──────────┐    ┌──────────┐    ┌──────────────┐
│COMMUNICATION │←→│CONTROLLER│←──→│ DECODER  │──→ │ OUTPUT UNIT  │
│   MODULE     │  │          │    │          │    │              │
└──────────────┘  └──────────┘    └──────────┘    └──────────────┘
                       ↕
                  ┌──────────┐
           550 ~~ │  BUFFER  │
                  └──────────┘
```

# FIG. 6

```
                    ( START )
                        │
                        ▼
        ┌─────────────────────────────────────────┐
 S610 ~ │ STORE DATA CONSTITUTING FILE RECEIVED    │
        │ FROM EXTERNAL DEVICE ACCORDING           │
        │ TO NON REAL TIME TRANSFER PROTOCOL       │
        └─────────────────────────────────────────┘
                        │
                        ▼
        ┌─────────────────────────────────────────┐
 S620 ~ │ DECODE PART OF STORED DATA               │
        │ BEFORE ALL DATA CONSTITUTING             │
        │ FILE IS COMPLETELY RECEIVED              │
        └─────────────────────────────────────────┘
                        │
                        ▼
        ┌─────────────────────────────────────────┐
 S630 ~ │ REPRODUCE THE DECODED DATA IN REAL TIME  │
        └─────────────────────────────────────────┘
                        │
                        ▼
                    (  END  )
```

# FIG. 7

```
   710              720              730              740
COMMUNICATION  →  BUFFER  →  DECODER  →  OUTPUT UNIT
   MODULE
```

# FIG. 8

```
                    ( START )
                        ↓
S810  ┌─────────────────────────────────────────┐
      │ STORE DATA CONSTITUTING FILE RECEIVED    │
      │     FROM EXTERNAL DEVICE ACCORDING       │
      │  TO NON REAL TIME TRANSFER PROTOCOL      │
      └─────────────────────────────────────────┘
                        ↓
S820  ┌─────────────────────────────────────────┐
      │     DECODE PART OF PRE-STORED            │
      │     DATA WHILE DATA IS STORED            │
      └─────────────────────────────────────────┘
                        ↓
S830  ┌─────────────────────────────────────────┐
      │ REPRODUCE THE DECODED DATA IN REAL TIME  │
      └─────────────────────────────────────────┘
                        ↓
                    ( END )
```

# FIG. 9

# FIG. 10

S1010  CALCULATE RESERVE STORAGE CAPACITY USING
TRANSMISSION SPEED OF FRONT PORTION OF
FILE RECEIVED AND STORED FROM EXTERNAL DEVICE
ACCORDING TO NON REAL TIME TRANSFER PROTOCOL

S1020  DECODE DATA AFTER DATA CONSTITUTING FILE MORE
THAN RESERVE STORAGE CAPACITY IS COMPLETELY STORED

S1030  REPRODUCE THE DECODED DATA IN REAL TIME